# EUROPÄISCHE PATENTANMELDUNG

(11) **EP 1 163 995 A1**
(43) Veröffentlichungstag der Anmeldung: **19.12.2001**
(21) Anmeldenummer: 00810528.0
(22) Anmeldetag: 16.06.2000
(51) Int. Cl.: B29C 51/08, B29C 67/00

(54) **Vorrichtung zur Formung von Folien mit Vertiefungen**

(71) Anmelder: Alcan Technology & Management AG, 8212 Neuhausen am Rheinfall (CH)
(72) Erfinder: Oster, Heinz, 8245 Feuerthalen (CH)

(57) **Zusammenfassung**

Eine Vorrichtung zur Formung wenigstens einer Vertiefung (58) aus einem folienförmigen Material (46), weist eine Matrize (12) mit wenigstens einer Gesenköffnung (14), wenigstens einen zur Formung der Vertiefung (58) in die Gesenköffnungen (14) einführbaren Formstempel (36) und einen Niederhalter (16) als Klemmeinrichtung zum Festhalten des folienförmigen Materials (46) zwischen Niederhalter (16) und Matrize (12) auf. In der Matrize (12) sind wenigstens innerhalb der Gesenköffnungen (14) verschiebbare Gegenstempel (40) angeordnet, wobei verformungswirksame Bereiche (38,42) der Formstempel (36) und der Gegenstempel (40) zum Festklemmen des folienförmigen Materials (46) zumindest teilweise gegeneinander anlegbar sind.

## Beschreibung

Die Erfindung betrifft eine Vorrichtung zur Formung wenigstens einer Vertiefung aus einem folienförmigen Material, mit einer wenigstens eine Gesenköffnung aufweisenden Matrize, wenigstens einem zur Formung der Vertiefung in die Gesenköffnungen einführbaren Formstempel und einem Niederhalter als Klemmeinrichtung zum Festhalten des folienförmigen Materials zwischen Niederhalter und Matrize.

Es ist bekannt, Bodenteile von Blisterpackungen, auch Durchdrückpackungen genannt, oder andere Verpackungsbehälter mit Vertiefungen bzw. Näpfen zur Aufnahme von Füllgütern beispielsweise durch Tiefziehen, Streckziehen oder Thermoformen herzustellen. Diese Verpackungen können aus thermoplastischen Kunststoffen oder aus Folienverbunden oder Laminaten, wie z.B. Aluminiumfolien mit auflaminierten Kunststofffolien oder aufextrudierten Schichten aus thermoplastischen Kunststoffen hergestellt werden.

Werden die Verpackungen aus metallfolienhaltigen Laminaten gefertigt, kann dies mit Umformwerkzeugen bestehend aus Stempel, Matrize und Niederhalter erfolgen. Während der Umformung ist das Laminat zwischen der Matrize und dem Niederhalter klemmend festgelegt. Mit dem Stempel wird das Laminat zur Erzeugung der gewünschten Vertiefung bzw. des Napfes in die Gesenköffnung der Matrize geführt, wobei das Laminat durch lokale Dehnung verformt wird. Aus dem ursprünglich planen Laminat wird somit ein Formteil mit einer oder einer Vielzahl von Vertiefungen geformt.

Um die Dehnungseigenschaften des zu verformenden Materials möglichst voll ausschöpfen zu können und damit Vertiefungen mit gutem Tiefungsverhältnis, d.h. grosse Tiefe bei kleinem Durchmesser, zu erzielen, ist es aus der EP-A-0779143 für die Kaltverformung metallfolienhaltiger Laminate bekannt, die Formung von Vertiefungen in zwei Schritten durchzuführen. Mit einem ersten Stempel mit einer verformungswirksamen Oberfläche mit einem hohen Reibungskoeffizienten wird die Metall-Kunststoff-Verbundfolie vorverformt und anschliessend mit einem zweiten Stempel mit einer verformungswirksamen Oberfläche mit einem niedrigen Reibungskoeffizienten endverformt. Dieses Verfahren hat den Nachteil, dass nacheinander zwei verschiedene Formstempel eingesetzt werden müssen, was eine hohe Präzision hinsichtlich der Ausrichtung der beiden Stempelsätze erfordert. Bei einer alternativen Variante wird anstelle von zwei unterschiedlichen Stempeln ein teleskopartiger zweiteiliger Stempel eingesetzt. Diese Stempel sind jedoch aufwendiger in der Konstruktion und auch nicht zur Verformung aller gängigen Laminate einsetzbar.

Der vorliegenden Erfindung liegt deshalb die Aufgabe zugrunde, eine Vorrichtung der eingangs genannten Art zu schaffen, mit welcher eine zweistufige Formung einer Vertiefung mit gutem Tiefungsverhältnis auf einfache Weise hergestellt werden kann.

Zur erfindungsgemässen Lösung der Aufgabe führt, dass in der Matrize wenigstens innerhalb der Gesenköffnungen verschiebbare Gegenstempel angeordnet sind, wobei verformungswirksame Bereiche der Formstempel und der Gegenstempel zum Festklemmen des folienförmigen Materials zumindest teilweise gegeneinander anlegbar sind.

Die erfindungsgemässe Anordnung eines Formstempels und eines Gegenstempels hat gegenüber den Anordnungen nach dem Stand der Technik den wesentlichen Vorteil, dass auf einfache Weise in zwei aufeinanderfolgenden Verformungsschritten bei der Bildung einer Vertiefung bzw. eines Napfes zunächst das Folien-Umformpotenzial des Bodenteils und anschliessend das Folien-Umformpotenzial des Seitenwandteils, oder in umgekehrter Reihenfolge, ausgeschöpft werden kann.
Bei einer bevorzugten erfindungsgemässen Vorrichtung sind die Gegenstempel auf einem in der Matrize in der Verformungsachse verschiebbar geführten Kolben angeordnet.

Die Oberfläche des verformungswirksamen Bereiches der Formstempel und/oder der Gegenstempel kann lokal unterschiedliche Reibungskoeffizienten aufweisen. Dadurch kann die Reibung zwischen dem Formstempel bzw. dem Gegenstempel und der zu verformenden Folie eingestellt und so das Gleitverhalten der Folie an der verformungswirksamen Oberfläche von Form- und Gegenstempel während des Verformungsvorganges beeinflusst werden.

Der Reibungskoeffizient der verformungswirksamen Oberfläche von Stempel und Gegenstempel kann so eingestellt werden, dass entweder der Stempel aus entsprechendem Material hergestellt ist oder eine entsprechende Beschichtung aufweist.

Ein niedriger Reibungskoeffizient ergibt sich beispielsweise mit Materialien wie Polytretrafluorethylen, Polyoximethylen (Polyacetal, POM), Polyethylen oder Polyethylenterephthalat, oder Mischungen hieraus. Anstelle der Kunststoffe können andere Werkstoffe in Frage kommen. Dies sind beispielsweise Metalle, wie Aluminium oder Chromstahl, insbesondere auch mit polierten Oberflächen. Weitere anwendbare Materialien sind beispielsweise keramische Schichten oder graphit-, bornitrid- oder molybdänsulfidhaltige Beschichtungen.

Als Materialien zur Erzeugung von Oberflächen mit hohen Reibungskoeffizienten können beispielsweise Metalle, wie Stahl, oder Kunststoffe, wie Polyacetal (POM), Polyethylen, Gummi, Hartgummi oder Kautschuke, einschliesslich Acrylpolymerisate, eingesetzt werden. Die Oberflächen von Metallen können beispielsweise durch Aufrauhen mit einem hohen Reibungskoeffizienten versehen werden.

Die äussere Gestalt von Form- und Gegenstempel im Bereich ihrer verformungswirksamen Oberfläche kann verschiedenartig ausgebildet sein und richtet sich nach der gewünschten Form der Vertiefung bzw. des Napfes. Im einfachsten Fall sind Form- und Gegenstempel von zylindrischer Form und weisen plane Bodenflächen auf, jedoch sind auch räumliche Formen wie z.B. eine Kegel-, Pyramiden-, Kegelstumpf-, Pyramidenstumpf-, Kugelsegment- oder Kalottenform möglich. Hierbei kann der Gegenstempel auch als Passform zum Formstempel ausgebildet sein.

Der Formstempel und/oder der Gegenstempel können auch zweiteilig mit einem hohlzylindrischen äusseren Stempelteil und einem in diesem gleitend geführten, teleskopisch ausfahrbaren inneren Stempelteil ausgestaltet sein.

Bei einer bevorzugten Ausführungsvariante der erfindungsgemässen Vorrichtung weise die Matrize und der Niederhalter neben einem Klemmbereich je eine am Rand der Öffnungen der Matrize und des Niederhalters endende Auflage aus einem Material mit niedrigem Reibungskoeffizienten zur Führung der Folie auf. Mit dieser Massnahme wird die Erzeugung eines gleichmässig verformten und porenfreien Randes der Vertiefung sichergestellt.

Die erfindungsgemässe Vorrichtung eignet sich insbesondere zur Herstellung von Vertiefungen in einer mit Kunststoff beschichteten Metallfolie durch Kaltverformen, beispielsweise zur Herstellung von Bodenteilen für Blisterpackungen.

Zur Verformung mit der erfindungsgemässen Vorrichtung geeignete Metall-Kunststoff-Verbundfolien weisen beispielsweise eine Metallfolie in einer Dicke von 8 bis 150 µm, bevorzugt 20 bis 80 µm, auf. Geeignete Metalle sind z.B. Stahl, Kupfer und Aluminium. Bevorzugte Folien aus Aluminium sind beispielsweise Aluminium einer Reinheit von 98% oder höher, wobei insbesondere auch Aluminiumfolien aus Legierungen des Typs AlFeSi oder AlFeSiMn eingesetzt werden können.

Als Kunststoffe können beispielsweise Schichten, Folien oder Folienverbunde aus thermoplastischen Kunststoffen der Reihen der Polyolefine, der Polyamide, der Polyester sowie des Polyvinylchlorids angewendet werden, wobei die Folien und Folienverbunde auch axial oder biaxial verstreckt sein können. Typische Beispiele von thermoplastischen Kunststoffen aus der Reihe der Polyolefine sind Polyethylene, wie MDPE, HDPE, uni- und biaxial verstreckte Polyethylene, Polypropylene, wie cast-Polypropylene und uni- oder biaxial verstreckte Polypropylene, oder aus der Reihe der Polyester das Polyethylenterephthalat. Die Schichtdicke der thermoplastischen Kunststoffe als Schicht, Folie oder Folienverbund in den Metall-Kunststoff-Verbundfolien kann beispielsweise 12 bis 100 µm, bevorzugt 20 bis 60 µm, betragen.

Die Metallfolien und thermoplastischen Kunststoffe können z.B. durch Kaschieren, Kalandrieren oder Extrusionskaschieren zu Verbunden gefügt werden. Zum Verbinden der Schichten können fallweise Kaschierkleber und Haftvermittler angewendet werden, und die zu verbindenden Oberflächen können durch Plasma-, Korona- oder Flammvorbehandlung modifiziert werden.

Beispiele von Metall-Kunststoff-Verbundfolien sind Laminate mit einer ersten Schicht, beispielsweise einer Folie oder einem Folienverbund aus den genannten thermoplastischen Kunststoffen, einer zweiten Schicht in Form einer Metallfolie und einer auf der freien Seite der Metallfolie angebrachten dritten Schicht, einer Siegelschicht aus einem Polyolefin, wie Polyethylen oder Polypropylen, oder PVC.

Weitere anwendbare Metalle-Kunststoff-Verbundfolien können eine erste Schicht, beispielsweise eine Folie oder einen Folienverbund aus den genannten thermoplastischen Kunststoffen, eine zweite Schicht in Form einer Metallfolie und eine dritte Schicht, beispielsweise eine Folie oder einen Folienverbund oder eine extrudierte Schicht, aus den genannten thermoplastischen Kunststoffen aufweisen. Weitere Schichten, wie Siegelschichten, können vorgesehen werden.

Die Metall-Kunststoff-Verbundfolien können auf wenigstens einer ihrer Aussenseiten oder auf beiden Aussenseiten eine Siegelschicht in Form einer siegelbaren Folie oder eines Siegellackes aufweisen. Die Siegelschicht ist bestimmungsgemäss in äusserster Lage innerhalb des Verbundaufbaus angeordnet. Insbesondere kann eine Siegelschicht auf einer Aussenseite des Verbundes vorgesehen sein, wobei diese Siegelschicht bei einer Blisterpackung gegen die Inhaltsseite gerichtet sein soll, um das Ansiegeln einer Deckelfolie oder dgl. zu ermöglichen.

Typische Beispiele aus der Praxis von mit der erfindungsgemässen Vorrichtung verformbaren Metall-Kunststoff-Verbundfolien sind:
oPA25/Al45/PVC60
oPA25/Al45/oPA25
Al120/PP50
oPA25/Al60/PE50
oPA25/Al60/PP60
oPA25/Al45/PVC100
oPA25/Al60/PVC60
oPA25/Al45/PVC, PE-beschichtet
oPA25/Al45/cPA25
oPA25/Al60/PVC100
oPA25/Al60/oPA25/EAA50
wobei oPA für orientiertes Polyamid, cPA für gegossenes (cast) Polyamid, PVC für Polyvinylchlorid, PE für Polyethylen, PP für Polypropylen, EAA für Ethylacrylsäure und Al für Aluminium steht und die Ziffern für die Schicht-, bzw. Foliendicke in µm stehen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 einen Querschnitt durch eine Formstation mit einer Matrize mit einer Gesenköffnung;
- Fig. 2 einen Querschnitt durch eine Formstation mit einer Matrize mit einer Vielzahl von Gesenköffnungen;
- Fig. 3 die Draufsicht auf die Matrize von Fig. 2 in Blickrichtung A;
- Fig. 4 die Draufsicht auf den Niederhalter von Fig. 2 in Blickrichtung B;
- Fig. 5 einen Längsschnitt durch eine Ausführungsvariante eines Formstempels mit Gegenstempel;
- Fig. 6 einen Längsschnitt durch eine weitere Ausführungsvariante eines Formstempels mit Gegenstempel;
- Fig. 7 einen Verfahrensablauf zur Herstellung von Blisterpackungen.

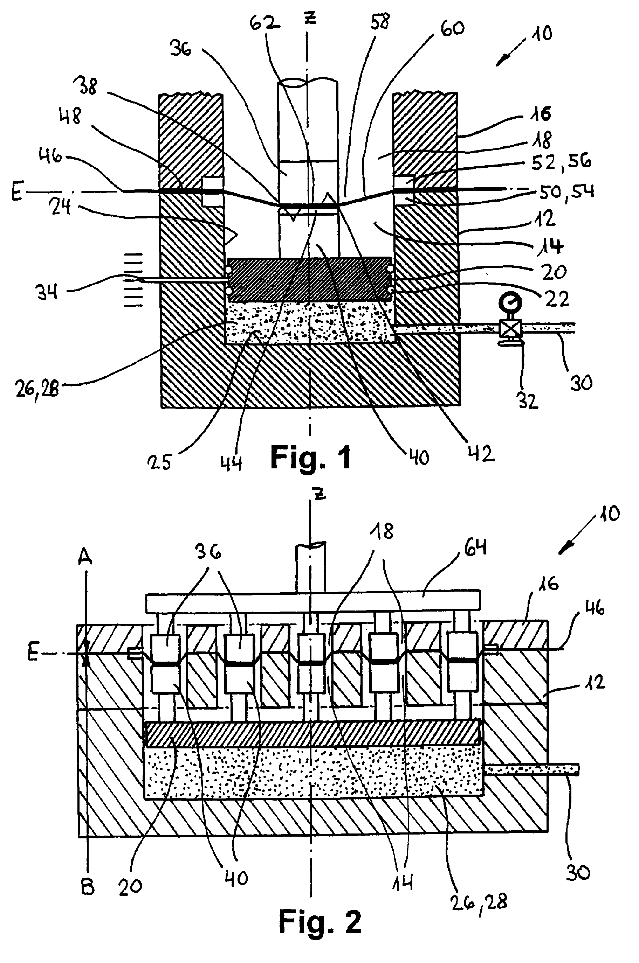

Eine in Fig. 1 dargestellte Formstation 10 weist eine Matrize 12 mit einer Matrizenöffnung 14 und einen Niederhalter 16 mit einer Niederhalteröffnung 18 auf. In der Matrize 12 ist ein Kolben 20 über Dichtungen 22 an der Innenwand 24 der Matrize 12 fluiddicht gelagert und begrenzt zum Boden 25 der Matrize 12 hin einen Zylinderraum 26, der über eine Hydraulikzuleitung 30 mit Hydraulikflüssigkeit 28 befüllbar ist. Über ein in der Hydraulikzuleitung 30 angeordnetes Ventil 32 erfolgt eine Steuerung der Bewegung des Kolbens 20 in Richtung seiner Achse z. In Abhängigkeit von seiner Funktion kann der Kolben 20 über das Ventil 32 druck- und/oder weggesteuert sein. Die Wegsteuerung ist in der Zeichnung durch einen Weganzeiger 34 symbolisiert. Selbstverständlich kann die Kolbenbewegung auch mit anderen, beispielsweise mechanischen Mitteln anstelle einer hydraulischen Betätigung durchgeführt werden.

Ein weggesteuerter Formstempel 36 durchdringt die Niederhalteröffnung 18 und ist in einer Verschiebungsrichtung z, die mit der Achsenrichtung des Kolbens 20 übereinstimmt, in die Matrizenöffnung 14 ein- und ausfahrbar. Ein dem Kolben 20 aufgesetzter Gegenstempel 40 liegt mit seinem Boden 42 dem Boden 38 des Formstempels 36 in der Verschiebungsrichtung z gegenüber und ist in die Niederhalteröffnung 16 einfahrbar. Der Boden 42 des Gegenstempels 40 ist mit einer Auflage 44 aus beispielsweise Gummi belegt.

Eine Metall-Kunststoff-Verbundfolie 46 ist in einem Klemmbereich 48 zwischen der Matrize 12 und dem Niederhalter 16 kraftschlüssig gehalten. Im Anschluss an den Klemmbereich 48 ist der gegen die Öffnungen 14, 18 gerichtete Rand der Matrize 12 und des Niederhalters 16 unter Bildung je einer ringförmigen Ausnehmung 50, 52 stufenförmig abgesetzt. In die Ausnehmungen 50, 52 ist je ein ringförmiges Einsatzteil 54, 56 aus einem Werkstoff mit niedriger Reibung eingesetzt. Die Folie 46 ist zwischen den beiden Einsatzteilen 54, 56 gleitend geführt.

Die Bildung einer Vertiefung bzw. eines Napfes 58 durch Formung der zwischen Matrize 12 und Niederhalter 16 eingespannten Folie 46 ist ohne weiteres aus Fig. 1 ersichtlich. Aus der zunächst in einer Einspannebene E liegenden Folie 46 wird diese durch Verformung mittels des Formstempels 36 in die Matrizenöffnung 14 hineingedrückt. Hierdurch bildet sich die Vertiefung 58 mit einem Seitenwandteil 60 zwischen Formstempel 36 und Innenwand 24 der Matrize und einem Bodenteil 62, der dem Boden 38 bzw. der verformungswirksamen Oberfläche des Formstempels 36 entspricht.

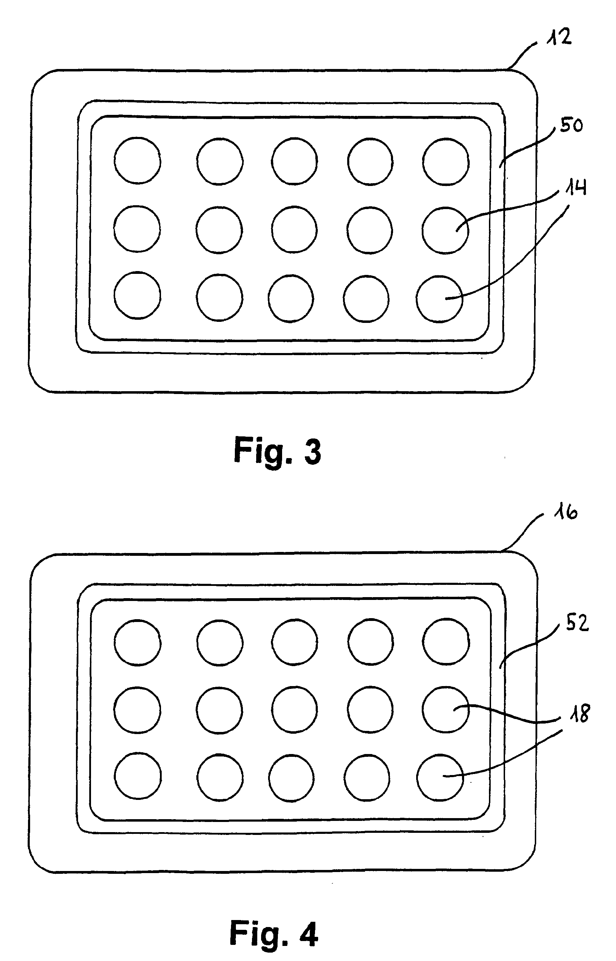

Die in den Fig. 2 bis 4 gezeigte Formstation unterscheidet sich von derjenigen von Fig. 1 im wesentlichen dadurch, dass die Matrize 12 und der Niederhalter 16 mehrere Öffnungen 14, 18 - im vorliegenden Fall 15 - und ein jedem Paar von Öffnungen 14, 18 zugeordnetes Paar Formstempel 36 und Gegenstempel 40 aufweisen. Die Formstempel 36 sind auf einer Trägerplatte 64 montiert. Eine Verschiebung der Trägerplatte 64 in Verschiebungsrichtung z führt damit zu einer simultanen Verschiebung aller Formstempel 36. In gleicher Weise sind alle Gegenstempel 40 auf einem gemeinsamen Kolben 20 montiert, so dass bei einer Verschiebung des Kolbens in Verschiebungsrichtung z auch die Gegenstempel 40 simultan bewegt werden. Diese Formstation ermöglicht somit die gleichzeitige Formung von jeweils einer der Anzahl Formstempel 36 bzw. Gegenstempel 40 entsprechenden Anzahl von Vertiefungen bzw. Näpfen 58 in der Metall-Kunststoff-Verbundfolie.

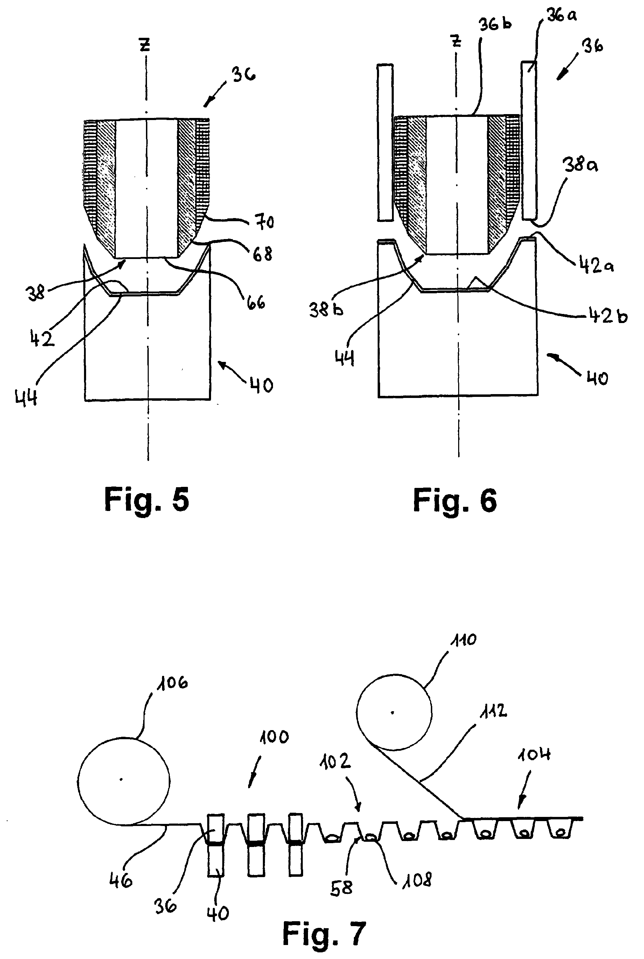

Der in Fig. 5 gezeigte Formstempel 36 ist aus verschiedenen Teilen 66, 68, 70 aus Werkstoffen mit unterschiedlicher Reibung gefertigt. Die verformungswirksame Oberfläche 38 des Formstempels 36 besteht aus dem flachen Boden 66 und den konzentrisch und gestuft angeordneten Seitenwänden 68, 70. Die verformungswirksame Oberfläche 38 erstreckt sich über alle Teile 66, 68, 70. Den verformungswirksamen Oberflächenteilen 66, 68, 70 können somit unterschiedliche Reibungskoeffizienten zugeordnet werden. Beispielsweise bestehen die Teile 66, 68, 70 aus Werkstoffen mit steigenden Reibungskoeffizienten, wobei der Bodenteil 66 den niedrigsten Reibungskoeffizienten aufweist.

Der mit der Auflage 44 aus beispielsweise Gummi belegte Boden 42 des Gegenstempels 40 weist eine Passform zur Anlage mit der verformungswirksamen Oberfläche 38 des Formstempels 36 auf.

Die in Fig. 6 gezeigte Ausführungsvariante des Formstempels 36 ist teleskopartig ausgebildet und weist einen ersten hohlzylinderförmigen Stempel 36a mit einer ersten ringförmigen verformungswirksamen Oberfläche 38a auf. In diesem ersten Stempel 36a ist gleitend ein in diesem verfahrbarer zweiter Stempel 36b mit einer zweiten verformungswirksamen Oberfläche 38b angeordnet. Dieser zweiteilige Formstempel 36 ermöglicht die Verformung mittels des Formstempels 36 in zwei Schritten. Der Boden 42 des Gegenstempels 40 ist - wie in Fig. 5 - der verformungswirksamen Oberfläche des Formstempels 36 angepasst, wobei ein ringförmiger Bodenteil 42a des ringförmigen Bodens 36a des Formstempels 36 und ein weiterer Boden 42b der verformungswirksamen Oberfläche 38b des Innenstempels 36b gegenüberliegt.

Bei einem in Fig. 7 gezeigten Verfahrensablauf zur Herstellung einer Blisterverpackung wird die Metall-Kunststoff-Verbundfolie 46 von einer Vorratsrolle 106 abgewickelt und zur Formung der Vertiefungen 58 taktweise durch eine Formstation 100 geführt. In einer nachfolgenden Abfüllstation 102 werden die Vertiefungen 58 mit einem Füllgut 108 wie z.B. Tabletten gefüllt. Beim anschliessenden Weitertransport der geformten und gefüllten Folie 46 wird diese mittels einer von einer Vorratsrolle 110 abgerollten Deckelfolie 112 aus beispielsweise mit Kunststoff beschichtetem Aluminium abgerollt und auf die Metall-Kunststoff-Verbundfolie 46 zur fertigen Blisterpackung aufgesiegelt. Die in endloser Form gebildete Blisterpackungen lassen sich anschliessend zu den gewünschten Packungsgrössen ablängen.

Nachfolgend wird die Funktionsweise des Formstempels 36 und des Gegenstempels 40 am Beispiel von Fig. 1 anhand von vier möglichen Umformvarianten beschrieben.

### Umformvariante 1

Die Folie 46 wird zwischen der Matrize 12 und dem Niederhalter 16 klemmend gehalten. Der Formstempel 36 fährt bis zur Berührung mit der Folie 46 auf das Niveau der Einspannebene E. Von der Gegenseite wird der Gegenstempel 40 ebenfalls an die noch unverstreckte Folie 46 herangeführt. Mittels eines vorgewählten und über den Kolben 20 aufgebrachten Druckes wird die Folie 46 zwischen dem Boden 38 des Formstempels 36 und dem Boden 42 bzw. der Gummiauflage 44 des Gegenstempels 40 klemmend gehalten. Die Kraft des Formstempels 36 wird grösser gewählt als die Kraft des Gegenstempels 40. Der Formstempel 36 dringt somit in die Matrizenöffnung ein und schiebt gleichzeitig den Gegenstempel 40 zurück. In diesem ersten Verformungsschritt wird die Folie 46 im Seitenwandteil 60 der sich bildenden Vertiefung 58 kontrolliert gedehnt, bis das Folien-Umformpotenzial im Seitenwandteil 60 ausgeschöpft ist. Nach dem Dehnen des Seitenwandteils 60 wird der Kolben 20 mit dem Gegenstempel 40 in seine Ausgangsstellung zurückgefahren. In einem zweiten Verformungsschritt wird durch weiteren Vortrieb des Formstempels 36 die bis anhin gegen den Boden 42 des Gegenstempels 40 geklemmte Folie 46, die den Bodenteil 62 der sich bildenden Vertiefung 58 bildet, gedehnt.

### Umformvariante 2

Die Folie 46 wird zwischen der Matrize 12 und dem Niederhalter 16 klemmend gehalten. Der Kolben 20 mit dem Gegenstempel 40 ist hierbei in seine Ausgangsstellung zurückgefahren. Der Formstempel 36 fährt soweit in die Matrizenöffnung 14, bis eine vorgewählte, das Folien-Umformpotenzial im Bodenteil 62 der sich bildenden Vertiefung 58 ausschöpfende Position erreicht ist. In diesem ersten Verfahrensschritt dehnt sich also die Folie 46 mehrheitlich im Bodenteil 62. In einem zweiten Verformungsschritt wird nun der Kolben 20 mit dem Gegenstempel 40 mit einem vorgewählten Druck gegen den Formstempel 36 gefahren und an die dem Boden 38 des Formstempels 36 aufliegende Folie 46 angelegt. Hierbei wird derjenige Teil der Folie 46, der den Bodenteil 62 der sich bildenden Vertiefung 58 bildet, zwischen dem Boden 38 des Formstempels 36 und dem Boden 42 bzw. der Gummiauflage 44 des Gegenstempels klemmend gehalten. Die Kraft des Formstempels 36 wird nun grösser gewählt als die Kraft des Gegenstempels 40. Der Formstempel 36 und der Gegenstempel 40 fahren somit mit der eingeklemmten Folie 46 in Richtung gegen den Boden 25 der Matrize 12, wobei nun der Seitenwandteil 60 der sich bildenden Vertiefung 58 gedehnt wird, bis das Folien-Umformpotenzial im Seitenwandteil 60 ausgeschöpft ist. Ist das gesamte Umformpotenzial der Folie 46 ausgeschöpft, fahren der Formstempel 36 und der Gegenstempel 40 in ihre Ausgangsstellung zurück.

### Umformvariante 3

Die Folie 46 wird zwischen der Matrize 12 und dem Niederhalter 16 klemmend gehalten. Der Formstempel 36 ist in seine Ausgangsstellung zurückgefahren. Der Gegenstempel 40 fährt auf eine das Folien-Umformpotenzial im Bodenteil 62 der sich bildenden Vertiefung 58 ausschöpfende Position in der Niederhalteröffnung 18. Hierbei weist der Boden 42 des Gegenstempels 40 eine Oberfläche mit einem hohen Reibungskoeffizienten auf, so dass das Folien-Umformpotenzial des Seitenwandteils 60 der sich bildenden Vertiefung 58 in diesem ersten Verformungsschritt ausgeschöpft wird. Nach Ausschöpfung des Folien-Umformpotenzials des Seitenwandteils 60 wird der Kolben 20 mit dem Gegenstempel 40 wieder in die Ausgangsstellung zurückgefahren. In einem zweiten Verformungsschritt wird der Formstempel 36 in die Matrizenöffnung 14 gefahren, bis das Folien-Umformpotenzial im Bodenteil 62 der sich bildenden Vertiefung 58 ausgeschöpft ist. Hierzu weist die Oberfläche des Bodens 38 des Formstempels 36 einen niedrigen Reibungskoeffizienten auf. Die Folie 46 kann im ersten Verformungsschritt auch zwischen Formstempel 36 und dem Gegenstempel 40 eingeklemmt sein.

### Umformvariante 4

Die Folie 46 wird zwischen der Matrize 12 und dem Niederhalter 16 klemmend gehalten. Der Formstempel 36 ist in seine Ausgangsstellung zurückgefahren. Der Kolben 20 mit dem Gegenstempel 40 wird auf eine vorgewählte, das Folien-Umformpotenzial des Bodenteils 62 der sich bildenden Vertiefung 58 ausschöpfende Position in die Niederhalteröffnung 18 gefahren. Hierzu weist die Oberfläche des Bodens 42 des Gegenstempels 40 einen niedrigeren Reibungskoeffizienten auf. Nach diesem ersten Verformungsschritt wird der Kolben 20 mit dem Gegenkolben 40 in die Ausgangsstellung zurückgefahren. In einem zweiten Verformungsschritt wird der Formstempel 36, dessen Boden 38 eine Oberfläche mit einem hohen Reibungskoeffizienten aufweist, auf eine vorgewählte Position in die Matrizenöffnung 14 gefahren, bis das Folien-Umformpotenzial im Seitenwandteil 60 ausgeschöpft ist. Im zweiten Verformungsschritt kann die Folie 46 auch zwischen dem Formstempel 36 und dem Gegenstempel 40 eingeklemmt sein.

## Patentansprüche

1. Vorrichtung zur Formung wenigstens einer Vertiefung (58) aus einem folienförmigen Material (46), mit einer wenigstens eine Gesenköffnung (14) aufweisenden Matrize (12), wenigstens einem zur Formung der Vertiefung (58) in die Gesenköffnungen (14) einführbaren Formstempel (36) und einem Niederhalter (17) als Klemmeinrichtung zum Festhalten des folienförmigen Materials (46) zwischen Niederhalter (16) und Matrize (12),
**dadurch gekennzeichnet, dass**
in der Matrize (12) wenigstens innerhalb der Gesenköffnungen (14) verschiebbare Gegenstempel (40) angeordnet sind, wobei verformungswirksame Bereiche (38,42) der Formstempel (36) und der Gegenstempel (40) zum Festklemmen des folienförmigen Materials (46) zumindest teilweise gegeneinander anlegbar sind.

2. Vorrichtung nach Anspruch 1, **dadurch gekennzeichnet, dass** die Gegenstempel (40) auf einem in der Matrize (12) in der Verformungsachse (z) verschiebbar geführten Kolben (20) angeordnet sind.

3. Vorrichtung nach Anspruch 1 oder 2, **dadurch gekennzeichnet, dass** die Oberflächen der verformungswirksamen Bereiche (38,42) der Formstempel (36) und der Gegenstempel (40) unterschiedliche Reibungskoeffizienten aufweisen.

4. Vorrichtung nach einem der Ansprüche 1 bis 3, **dadurch gekennzeichnet, dass** die Oberfläche des verformungswirksamen Bereiches (38,42) der Formstempel (36) und/oder der Gegenstempel (40) lokal unterschiedliche Reibungskoeffizienten aufweisen.

5. Vorrichtung nach einem der Ansprüche 1 bis 4, **dadurch gekennzeichnet, dass** die Formstempel (36) und/oder die Gegenstempel (40) zweiteilig mit einem hohlzylindrischen äusseren Stempelteil (36a) und einem in diesem gleitend geführten, teleskopisch ausfahrbaren inneren Stempelteil (36b) ausgestaltet sind.

6. Vorrichtung nach einem der Ansprüche 1 bis 5, **dadurch gekennzeichnet, dass** die Matrize (12) und der Niederhalter (16) neben einem Klemmbereich (48) je eine am Rand der Öffnungen (14,18) der Matrize (12) und des Niederhalters (16) endende Auflage aus einem Material mit niedrigem Reibungskoeffizienten zur Führung der Folie (46) aufweisen.

7. Verwendung der Vorrichtung nach einem der Ansprüche 1 bis 6, zur Herstellung von Vertiefungen in einer mit Kunststoff beschichteten Metallfolie durch Kaltverformen.

8. Verwendung nach Anspruch 7 zur Herstellung von Bodenteilen für Blisterpackungen.
